(19) Europäisches Patentamt
European Patent Office
Office européen des brevets

(11) Veröffentlichungsnummer: **0 418 686 A2**

(12) # EUROPÄISCHE PATENTANMELDUNG

(21) Anmeldenummer: **90117351.8**

(22) Anmeldetag: **08.09.90**

(51) Int. Cl.⁵: **C08L 75/04**, C08L 55/02, C08L 67/02, //(C08L75/04,55:02, 67:02),(C08L55/02,75:04,67:02), (C08L67/02,75:04,55:02)

(30) Priorität: **21.09.89 DE 3931419**

(43) Veröffentlichungstag der Anmeldung: **27.03.91 Patentblatt 91/13**

(84) Benannte Vertragsstaaten: **BE DE FR GB IT NL**

(71) Anmelder: **BAYER AG**

**W-5090 Leverkusen 1 Bayerwerk(DE)**

(72) Erfinder: **Goyert, Wilhelm, Dr.**
**Haberstrasse 48**
**W-5090 Leverkusen(DE)**
Erfinder: **Winkler, Jürgen, Dipl.-Ing.**
**Burscheider Strasse 196**
**W-5090 Leverkusen 3(DE)**
Erfinder: **Wussow, Hans-Georg, Dr.**
**Benrodestrasse 51**
**W-4000 Düsseldorf 13(DE)**

(54) **Thermoplastische Polymermischung aus Polyurethan und ABS und ein Verfahren zu ihrer Herstellung.**

(57) Verbesserte thermoplastische Polymermischungen enthalten eine Mischung aus einem thermoplastischen Polyurethan A, wenigstens einer Komponente B, die ein gepfropftes Polybutadien aufweist und gegebenenfalls wenigstens einer weiteren thermoplastische Komponente C, wobei das Gewichtsverhältnis aus A + B : C zwischen 95 : 5 und 5:95 liegt und in Polyurethan A 5 bis 25 Gew.-% einer Verbindung mit einem Molekulargewicht von 600 bis 6000 enthalten sind, die Hydroxyl- oder Aminogruppen aufweist.

EP 0 418 686 A2

# THERMOPLASTISCHE POLYMERMISCHUNG AUS POLYURETHAN UND ABS UND EIN VERFAHREN ZU IHRER HERSTELLUNG

Die Erfindung betrifft thermoplastische Polymermischungen, bestehend im wesentlichen aus einer Mischung aus einem thermoplastischen Polyurethan A, wenigstens einer Komponente B, die ein gepfropftes Polybutadien aufweist und gegebenenfalls einer weiteren thermoplastischen Komponente C, Hilfsstoffen D und Füllstoffen oder Fasern E.

Aus EP-A 0 131 714 sind Polymerblends aus Polyurethangläsern und Schlagzähmodifikatoren wie z.B. Butylacrylat beschrieben. Blends von so hohem Weiterreißwiderstand sind dort nicht angegeben. Der Zusatz von ABS und butadienhaltigen Pfropfkautschuken ist dort nicht erwähnt.

In der US-A 4 179 479 sind Abmischungen aus thermoplastischem Polyurethan mit Thermoplasten wie z.B. ABS, Polycarbonat in Kombination mit Acrylatzusätzen be kannt. Die in den Beispielen angegebenen Mischungen haben eine Härte von 32 bis 72 Shore D (E-Modul < 1000 MPa).

In der DE-A 2 854 409 ist ein Verfahren zur Herstellung von thermoplastischen Chemiewerkstoffen durch Einspeisung eines vorgefertigten thermoplastischen Polymeren in einen Extruder und Zugabe von Polyisocyanaten und Kettenverlängerungsmitteln in einer zweiten Einspeisstelle bekannt. Weiterreißwiderstand und Verarbeitbarkeit der so erhaltenen Werkstoffe genügen zum Teil nicht den gestiegenen Anforderungen der Praxis.

In der DE-A 2 405 531 wird der Zusatz von ABS zu thermoplastischen Polyurethanen in bestimmten Molekulargewichtsbereichen angegeben. Der Elastizitätsmodul und der Weiterreißwiderstand entsprechen ebenfalls nicht den gestiegenen Anforderungen.

In "Rubber World", Band 199, Nr. 6 (1989), Seite 30-35 werden verschiedene "Impact modifier", wie Polymethylmethacrylat als Zusätze zu reinem Hartsegment beschrieben. Die Verschleißfestigkeit (Weiterreißwiderstand) dieser Polymeren ist aber schlecht und das dort verwendete ABS ergibt schlechte Kerbschlagzähigkeiten (Notched Izod impact strength).

Aufgabe der Erfindung war es deshalb, thermoplastische Polymermischungen mit einem verbesserten Weiterreißwiderstand und erhöhter Härte bereitzustellen, die sich gut verarbeiten lassen.

Gegenstand der Erfindung sind thermoplastische Polymermischungen aus wenigstens einem thermoplastischen Polyurethan A und wenigstens einem weiteren Thermoplasten B, bestehend im wesentlichen aus einer Mischung aus

A) einem thermoplastischen Polyurethan erhältlich durch Reaktion von
  a) einem Diisocyanat Aa)
  b) wenigstens einem vorzugsweise kurzkettigen Kettenverlängerer Ab), insbesondere einem Diol, vorzugsweise mit einem Molekulargewicht von maximal 399
  c) einer Hydroxylgruppen- oder Aminogruppen-haltigen höhermolekularen Verbindung Ac), vorzugsweise mit einem Molekulargewicht von 600 bis 6000

B) wenigstens einem Pfropfkautschuk und/oder ABS-Thermoplasten B, wobei das Gewichtsverhältnis von A : B von 96 : 4 bis 4 : 96 betragen kann, bevorzugt 90:10 bis 70:30,

C) gegebenenfalls mit wenigstens einer weiteren thermoplastischen Komponente C, wobei das Gewichtsverhältnis von (A + B) : C 95 : 5 bis 5 : 95 sein kann,

D) gegebenenfalls den üblichen Hilfsstoffen und

E) gegebenenfalls Füllstoffen und/oder Fasern mit der Maßgabe, daß, bezogen auf die Summe Aa) bis Ac) der Gewichtsanteil von Ac) 5 bis 25 Gew.-% beträgt und daß das Verhältnis NCO-Gruppen der Komponente Aa) zu den Zerewitinoff-aktiven Gruppen der Komponenten Ab) und Ac) 0,9 bis 1,15, bevorzugt 0,9 bis 1,1 beträgt und als C) verwendete Terephthalsäureester zu weniger als 20 % eingesetzt werden.

In einer bevorzugten Ausführungsform wird die Komponente B ohne Zusatz der Komponente C) verwendet. In einer anderen Ausführungsform werden, bezogen auf die Summe der Komponenten B und C, wenigstens 20, insbesondere wenigstens 50 Gew.-Teile B eingesetzt.

Die erfindungsgemäßen Polymermischungen weisen eine Shore-Härte von 73 bis 90 Shore-D, bevorzugt 80 bis 90 Shore-D und einen E-Modul von mehr als 1000 MPa, bevorzugt 1900 bis 3000 MPa, besonders bevorzugt von 2200 bis 3000 MPa auf.

Die erfindungsgemäßen Mischungen vereinigen überraschenderweise die erforderlichen Eigenschaften optimal. Die Festigkeiten, insbesondere Verschleißfestigkeit und Weiterreißwiderstand sind extrem hoch. Die Weiterverarbeitung ist im Gegensatz zur Weiterverarbeitung anderer Mischungen ohne Vakuumtrocknung des Granulates möglich. Mit den erfindungsgemäßen Mischungen aufgebaute Formkörper zeigen keine Entmischungserscheinungen, wie z.B. opakes Aussehen. Trotz des hohen E-Moduls von vorzugs weise

mehr als 1900 MPa bzw. der hohen Shore-D-Härte (> 72 D) weisen die erfindungsgemäßen Mischungen noch hohe Bruchdehnungswerte und ein hervorragendes Kälteschlagverhalten auf. Die Mischungen zeigen weiterhin eine Verbesserung im Hinblick auf Ausdehnungskoeffizienten, Benzinbeständigkeit, Quellung in polaren Lösungsmitteln und Hydrolysebeständigkeit. Überraschend ist, daß so harte Polymermischungen noch ein so günstiges Verschleißverhalten zeigen.

Erfindungsgemäß zu verwendende Diisocyanate Aa) sind die an sich bekannten aliphatischen, cycloaliphatischen, araliphatischen, aromatischen und heterocyclischen Diisocyanate des Standes der Technik. Erfindungsgemäß bevorzugte Diisocyanate sind aromatische Diisocyanate, Naphthylen-1,5-diisocyanat, 3,3′-Dimethyl-4,4′-diisocyanatodiphenyl (TODI), 1,4-Diisocyanatobenzol und das entsprechend hydrierte Produkt, Toluylendiisocyanate und insbesondere die Diphenylmethandiisocyanat-Isomeren. Besonders bevorzugt ist das 4,4′-Diisocyanatodiphenylmethan oder sein Isomerengemisch mit bis zu 5 Mol-%, vorzugsweise 1 bis 4 Mol-%, des 2,4′-Diisocyanatodiphenylmethans, zumeist begleitet von sehr geringen Mengen des 2,2′-Diisocyanato-diphenylmethan-Isomeren.

Die genannten Diisocyanate können gegebenenfalls zusammen bis etwa 15 Mol-% (bezogen auf Diisocyanat) eines höherfunktionellen Polyisocyanates eingesetzt werden; die Menge des höherfunktionellen Polyisocyanats muß jedoch so begrenzt werden, daß ein noch schmelzbares bzw. thermoplastisches Polyurethanelastomeres erhalten wird. Eine größere Menge an höherfunktionellen Isocyanaten muß im allgemeinen durch die Mitverwendung von im Durchschnitt weniger als difunktionellen Hydroxyl-bzw. Aminoverbindungen bzw. auch von Monoisocyanaten ausgeglichen werden, so daß eine zu weit gehende chemische Vernetzung des Produktes vermieden wird. Beispiele für höherfunktionelle Isocyanate und monofunktionelle Verbindungen sind ebenfalls aus dem oben zitierten Stand der Technik zu entnehmen. Beispielsweise seien Monoamine wie Butyl- oder Dibutylamin, Hydroxylamin, Stearylamin, N-Methylstearylamin, sowie Monoalkohole wie Butanol-1, 2-Ethylhexanol-1, Dodecanol-1, Isobutanol oder tert.-Butanol, Cyclohexanol oder Ethylenglykolmonomethylether und Stearylalkohol erwähnt.

Bevorzugte Kettenverlängerungsmittel Ab) sind z.B. die in DE-A-23 02 564, 24 23 764, 25 49 372, 24 02 840, 24 57 387 und 28 54 384 beschriebenen Verbindungen. Es sind dies insbesondere niedermolekulare Polyalkohole, vorzugsweise Diole, Diamine, insbesondere aliphatische Diamine, Hydrazine und Hydrazidderivate. Als Diamine seien Diethyl-toluylendiamine, oder Isophorondiamin genannt. Auch Aminoalkohole wie Ethanolamin, Diethanolamin, n-Methyldiethanolamin, 3-Aminopropanol oder Verbindungen wie Hydrazin (Hydrat) oder Carbodihydrazid kommen erfindungsgemäß in Frage. Bevorzugte Kettenverlängerungsmittel sind Diole wie z.B. Ethylenglykol, Di-und Triethylenglykol, Hexandiol-1,6 und Hydrochinon-di- β-hydroxyethylether, sowie besonders bevorzugt das Butandiol-1,4, gegebenenfalls in Gemischen mit anderen Diolen, insbesondere Hexandiol-1,6. Bevorzugt werden Gemische von 96 bis 80 Mol-% Butandiol-1,4 mit 4 bis 20 Mol-% Hexandiol-1,6. Das Molekulargewicht der Kettenverlängerer liegt bei 32 bis 399, bevorzugt bei 62 bis 220.

Ferner können in dem Fachmann bekannter Form monofunktionelle Verbindungen in untergeordneten Anteilen,z.B. von 0,01 bis 4 Gew.-%, bezogen auf PU-Feststoff, als sogenannte Kettenabbrecher mitverwendet werden. Beispiele sind Monoalkohole wie Butanol, 2-Ethylenhexanol, Isobutylalkohol, Octanol-1, Stearylalkohol oderMonoamine wie Anilin, Dibutylamin, N-Methylstearylamin oder Piperidin.

Bevorzugte Hydroxylgruppen-haltige höhermolekulare Verbindungen Ac) sind Polyester-, Polyestercarbonat- und Polyetherdiole, z.B. Polyesterdiole aus geradkettigen oder verzweigten aliphatischen und/oder cycloaliphatischen Diolen und aliphatischen Dicarbonsäuren, insbesondere Adipinsäure. Sie können jedoch auch untergeordnete Mengen an aromatischen Dicarbonsäuren, insbesondere Phthalsäure und gegebenenfalls auch Terephthalsäure, sowie deren Hydrierungsprodukte enthalten.

Ferner sind geeignet Hydroxylpolycarbonate, Hydroxypolycaprolactone. In einer besonders bevorzugten Ausführungsform wird Butandiol-1,4-adipat vom Molekulargewicht 1500 bis 3000 verwendet.

Bevorzugt werden ferner Hydroxyetherdiole auf Basis Ethylenoxid, Propylenoxid oder Mischpolyether aus Propylenoxid und/oder Ethylenoxid und/oder Tetrahydrofuran, so z.B. Hydroxyetherdiole auf Basis Tetrahydrofuran mit einem Molekulargewicht von 1000 bis 3000. Geeignete Polyole werden z.B. in den deutschen Offenlegungsschriften 23 02 564, 24 23 764, 25 49 372 (US-PS 3 963 679), DE-OS 24 02 840 (US-PS 3 984 607), DE-AS 24 57 387 (US-PS 4 035 213) und in der DE-OS 2 854 384, 2 920 501 und 3 405 531 eingehend beschrieben.

Gegebenenfalls können auch höhermolekulare Polyaminoverbindungen, vorzugsweise mit primären aromatischen Aminogruppen eingesetzt werden. Bevorzugte Vertreter werden beispielsweise durch Hydrolyse von entsprechenden NCO-Prepolymeren auf der Basis von höhermolekularen Polyhydroxyverbindungen und überschüssigen aromatischen Diisocyanaten durch (vorzugsweise basische) Hydrolyse hergestellt. Beispiele für diese Verfahren werden in DE-A-2 948 419, DE-A-3 039 600, DE-A-3 112 118, EP-A-61 627, EP-A-71 132 und EP-A-97 869 angegeben. In der erstgenannten Patentschrift werden auch weitere

Verfahren des Standes der Technik zur Herstellung von aromatischen Aminoverbindungen höhermolekularer Struktur, sogenannter Aminopolyether, genannt, wie sie für das erfindungsgemäße Verfahren geeignet sind. Weitere Herstellungsverfahren werden in der DE-AS 1 694 152, FR-PS 1 415 317 oder DE-AS 1 155 907 beschrieben.

Der Gewichtsanteil der Komponente $A_c$ beträgt bezogen auf die Summe $A_a$-$A_c$ 5-25 %, bevorzugt 8-15 %.

Vor und/oder bei und/oder nach der Polyurethan-Reaktion können selbstverständlich die üblichen Hilfsstoffe D wie Katalysatoren, Trennmittel, Antistatika, Flammschutzmittel und Einfärbemittel nach dem Stand der Technik (siehe z.B. DE-A-28 54 409, DE-OS 29 20 501 und DE-PS 33 29 775) zugegeben werden. Auch Antioxidantien und UV-Absorber (Lichtschutzmittel) sind nach dem Stand der Technik möglich (siehe DE-A-34 05 531).

Als Katalysatoren können so z.B. tertiäre Amine, organische Metallverbindungen, insbesondere organische Zinn, Blei- und Titanverbindungen eingesetzt werden, z.B. Zinn-II-acetat, Zinn-II-ethylhexoat, Dibutylzinndilaurat oder Bleiacetat.

Als Trennmittel werden vorzugsweise Wachse oder Öle verwendet, ferner z.B. langkettige Verbindungen mit Carboxyl-, Ester-, Amid-, Urethan- oder Harnstoffgruppen sowie auch Silicone, wie sie als Trennmittel beispielsweise in der DE-OS 2 204 470 aufgeführt sind.

Die Mengen an Reaktionskomponenten Aa) bis Ac) für die Polyurethane werden im erfindungsgemäßen Verfahren in der Regel so gewählt, daß das NCO/OH-Äquivalentverhältnis von Isocyanat zu OH-Verbindungen zwischen 0,9 und 1,15, bevorzugt 0,95 und 1,03 liegt.

Bevorzugte Pfropfkautschuke 8 und/oder ABS-Thermoplasten B sind elastisch-thermoplastische Produkte, welche im wesentlichen aus den Monomeren Acrylnitril, Butadien und Styrol bzw. $\alpha$-Methylstyrol aufgebaut sind. Butadien kann teilweise durch eine andere Kautschukkomponente ersetzt sein, z.B. durch einen Ethylen-Propylen-1,5-Dien-Methylenkautschuk (EPDM-Kautschuk) oder Acrylkautschuke, liegt vorzugsweise jedoch zu mindestens 20 Gew.-%, insbesondere 25 - 40 Gew.-%, bezogen auf Komponente B vor.

Diese Polymerisate werden in an sich bekannter Weise durch Emulsions-, Suspensions-, Masse- und Lösungspolymerisation bzw. Kombinationen dieser Verfahren hergestellt, wie es z.B. von C.H. Basdekis in "ABS-Plastics" Reinhold Publishing Corporation, New York, 1964, beschrieben wird.

Erfindungsgemäß bevorzugte ABS-Polymerisate B sind Mischungen aus

Ba) 5-70 Gew.-% eines oder mehrerer elastomerer Pfropfprodukte und

Bb) 95-30 Gew.-% eines oder mehrerer thermoplastischer nicht-elastomerer Harze.

Pfropfprodukte Ba) sind bevorzugt Polymerisate, die durch Polymerisation von Pfropfmonomeren in Anwesenheit eines Kautschuks als Pfropfbasis erhalten werden. Der Kautschukanteil beträgt dabei ca. 5 bis 80 Gew.-% und wird durch das Polymerisationsverfahren mitbestimmt.

Als Pfropfbasis kommen insbesondere Polybutadien-, Butadien/Acrylnitril- und Butadien/Styrol-Polymerisate sowie Butadien-Styrol-Blockpolymerisate in Betracht. Pfropfmonomere sind hauptsächlich Styrol, Gemische aus Styrol und Acrylnitril, bevorzugt im Gewichtsverhältnis 90:10 bis 50:50, Gemische aus Styrol und Methylmethacrylat, bevorzugt im Gewichtsverhältnis 5:95 bis 95:5, sowie Styrol-Acrylnitril-Methylm ethacrylat-Gemische.

Das den zweiten Bestandteil der ABS-Polymerisate bildende thermoplastische Harz Bb) bildet die kontinuierliche Phase (Matrix) und ist z.B. ein Polymerisat oder Copolymerisat von Styrol, $\alpha$-Methylstyrol, Acrylnitril, Methylmethacrylat und Maleinsäureanhydrid.

Bevorzugt sind Polystyrol, Styrol-Acrylnitril-Copolymerisate mit einem Acrylnitril-Gehalt von 20 bis 35 Gew.-% sowie $\alpha$-Methylstyrol-Acrylnitril-Copolymere mit einem Acrylnitril-Gehalt von 20 bis 31 Gew.-%. Das Gewichtsmittel des Molekulargewichts dieser Harze ist meist 50.000 bis 550.000. Die molekulare Uneinheitlichkeit, ausgedrückt durch den Wert $(M_w/M_n)-1 = U_n$ ist 1,0 bis 3,5.

Bevorzugte Polyester C lassen sich aus Terephthalsäure (oder ihren reaktionsfähigen Derivaten) und Alkandiolen mit 2 bis 10 C-Atomen nach bekannten Methoden herstellen (Kunststoff-Handbuch, Bd. VIII, S. 695 ff, Carl Hanser Verlag, München 1973). Terephthalsäureester B werden aber zu weniger als 20 Gew.-%, bezogen auf die Summe B + C, eingesetzt.

Bevorzugte Polyalkylonterephthalate C enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate C können neben Terephthalsäureresten bis zu 20 Mol-% Reste anderer aromatischer Dicarbonsäuren mit 8 bis 14 C-Atomen, aliphatischer Dicarbonsäuren mit 4 bis 12 C-Atomen enthalten, wie z.B. Reste von Phthalsäure, Isophthalsäure, Naphthalin-2,6-dicarbonsäure, Diphenyl-4,4′-dicarbonsäure, Bernstein-, Adipin-, Sebacinsäure, Azelainsäure und Cyclohexandiessigsäure.

Die bevorzugten Polyalkylenterephthalate C können neben Ethylenglykol- bzw. Butandiol-1,4-resten bis zu 20 Mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-β-hydroxyethoxyphenyl)-propan und 2,2-Bis-(4-hydroxypropoxyphenyl)-propan (DE-OS 2 715 932).

Die Polyalkylenterephthalate C können durch Einbau relativ kleiner Mengen 3- oder 4-wertiger Alkohole oder 3- oder 4-basischer Carbonsäuren, wie sie z.B. in der DE-OS 1 900 270 und der US-PS 2 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Moi-% des Verzweigungsmittels, bezogen auf die Säurekomponente, zu verwenden.

Besonders bevorzugt sind Polyalkylenterephthalate C, die allein aus Terephthalsäure oder deren reaktionsfähigen Derivaten (z.B. deren Dialkylestern) und Ethylenglykol oder Butandiol-1,4 hergestellt worden sind.

Die als Komponente C vorzugsweise verwendeten Polyethylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, und die als Komponente B verwendeten Polybutylenterephthalate besitzen im allgemeinen eine Intrinsic-Viskosität von 0,7 bis 1,5 dl/g, vorzugsweise 0,8 bis 1,3 dl/g, insbesondere 0,8 bis 1,05 dl/g, jeweils gemessen in Phenol/o-Dichlorbenzol (1:1 Gew.-Teile) bei 25° C in 0,5 %iger Lösung.

Anstelle der Homo- oder Copolyester können auch die Mischungen dieser Polyester eingesetzt werden. Bevorzugte Mischungen bestehen aus

a) 1-99, vorzugsweise 10-80, insbesondere 30-60 Gew.-% Polyethylenterephthalat und

b) 99-1, vorzugsweise 90-20, insbesondere 70-40 Gew.-% Poly(1,4-butylenterephthalat).

Besonders bevorzugt ist Poly(1,4-butylenterephthalat).

Die erfindungsgemäßen Polyester-Formmassen können übliche Additive, wie Gleit- und Entformungsmittel, Nucleiermittel, Stabilisatoren, Füll- und Verstärkungsstoffe, Flammschutzmittel sowie Farbstoffe enthalten.

Die gefüllten bzw. verstärkten Formmassen können bis zu 60, vorzugsweise 10 bis 50, Gew.-% bezogen auf die Formmasse, eines Füllstoffes und/oder Verstärkungsstoffes enthalten. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die mit Flammschutzmitteln ausgerüsteten Polyester-Formmassen enthalten Flammschutzmittel in einer Konzentration von im allgemeinen weniger als 30 Gew.-%, bezogen auf die Formmassen.

Als besonders bevorzugte Polycarbonate C kommen die durch Umsetzung von Dihydroxydiarylalkanen mit Phosgen oder Diestern der Kohlensäure erhältlichen Polykondensate in Betracht, wobei neben den unsubstituierten Di hydroxydiarylalkanen auch solche geeignet sind, deren Arylreste in o- und/oder m-Stellung zur Hydroxylgruppe Methylgruppen oder Halogenatome tragen.

Ebenso sind verzweigte Polycarbonate geeignet. Diese Polycarbonate haben im allgemeinen mittlere Molekulargewichte zwischen 10 000 und 100 000, vorzugsweise zwischen 20 000 und 40 000.

Geeignete aromatische Dihydroxyverbindungen sind z.B. Hydrochinon, Resorcin, 4,4′-Dihydroxydiphenyl,. Bis-(hydroxy-phenyl)-alkane wie beispielsweise $C_1$-$C_8$-Alkylen-bzw. $C_2$-$C_8$-Alkyliden-bisphenole, Bis-(hydroxyphenyl)cycloalkane wie beispielsweise $C_5$-$C_{15}$-Cycloalkylen- bzw. $C_5$-$C_{15}$-Cycloalkylidenbisphenole, Bis-(hydroxy-phenyl)sulfide, -ether, -ketone, -sulfoxide oder -sulfone.

Ferner α,α′-Bis-(hydroxyphenyl)-diisopropylbenzol sowie die entsprechenden kernalkylierten bzw. kernhalogenierten Verbindungen. Bevorzugt sind Polycarbonate auf Basis von Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibrom-phenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie α,α′-Bis-(4-hydroxyphenyl)-p-diisopropylbenzol.

Weitere, für die Herstellung von Polycarbonaten geeignete Bisphenole sind in den US-Patenten 3 028 365, 2 999 835, 3 148 172, 3 271 368, 2 970 137, 2 991 273, 3 271 367, 3 280 078, 3 014 891 und 2 999 846 beschrieben.

Bevorzugte Polycarbonate können grundsätzlich als solche definiert werden, die wiederkehrende Carbonatgruppen

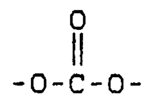

und an diese Carbonatgruppen geknüpfte Einheiten der Formel

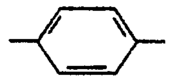

besitzen (vgl. US-Patentschrift 3 070 563).

Besonders bevorzugte aromatische Polycarbonate weisen wiederkehrende Struktureinheiten der Formel

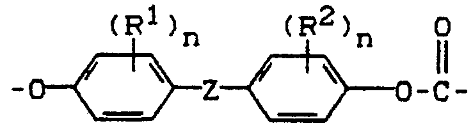

auf, worin

Z eine Einfachbindung, ein Alkylen- oder Alkylidenrest mit 1 bis 7 C-Atomen, ein Cycloalkylen- oder Cycloalkylidenrest mit 5 bis 12 C-Atomen, ein Sauerstoffatom, ein Schwefelatom, eine -CO-, -SO-oder $-SO_2$-Gruppe, vorzugsweise Methylen oder Isopropyliden,

$R^1$ und $R^2$ ein Wasserstoffatom, ein Halogenatom oder ein Alkylen- oder Alkylidenrest mit 1 bis 7 C-Atomen und

n eine ganze Zahl von 0 bis 4 sind.

Bevorzugte aromatische Polycarbonate haben einen Schmelzindex von etwa 1 bis 24 g pro 10 Minuten bei 300 °C, gemessen nach ASTM D-1238.

Das wegen seiner Verfügbarkeit wichtigste aromatische Polycarbonat ist das Polycarbonat auf Basis von Bis-(4-hydroxyphenyl)-2,2-propan, bekannt als Bisphenol A Polycarbonat; im Handel erhältlich z.B. in 4 Handelsformen der Mobay Chemical Corporation, USA, als Merlon M 39 (Schmelzindex etwa 12 bis 24), M 40 (Schmelzindex etwa 6 bis 12), M 50 (Schmelzindex etwa 3 bis 6) und M 60 (Schmelzindex <3 [g/10 Min] bei 300 °C). Der Zug-E-Modul dieser Typen liegt bei etwa 2300 MPa (DIN 53 457).

Andere erfindungsgemäß geeignete Thermoplaste C sind Polystyrol (insbesondere schlagzähes Polystyrol), aromatische Polyether (z.B. Polyphenylenoxid) und Polyether-Weichsegmente enthaltendes Polybutylenglykolterephthalat. Polymerisate dieser Art werden z.B. von Vieweg et al. im "Kunststoff-Handbuch", Bd. II, IV-VII, IX und XI, Carl Hanser Verlag, München, 1963-1971, und von Hans-Jürgen Saechtling im "Kunststofftaschenbuch", 20. Ausgabe, Carl Hanser Verlag, München-Wien, 1977, beschrieben.

Zusätzlich können als Komponente E Füllstoffe oder Fasern enthalten sein.

Den beanspruchten Polymermischungen können insbesondere bis zu 50 Gew.-% anorganische oder organische Fasern und/oder andere anorganische Füllstoffe wie Glimmer oder Talkum zugemischt werden.

Als faserartige Verstärker sind anorganische Fasern besonders bevorzugt wegen des Verstärkungseffektes und ihrer Wärmestandfestigkeit. Bevorzugte anorganische Fasern für die vorliegende Erfindung sind beschlichtete Glasfasern mit einer Stärke von 8 - 30, insbesondere 10 - 18 µm sowie mit einer Länge von 0,3 mm bis etwa 100 mm, insbesondere von 1 - 10 mm, die nach dem Stand der Technik hergestellt werden. Ein Zusatz von 10 bis 40 Gew.-% ist besonders günstig.

Die Glasfaserschlichten bestehen vorzugsweise im wesentlichen aus 2 Komponenten: einer filmbildenden Komponente (im allgemeinen Polyvinylacetat, Polyester, Polyurethane oder Epoxidharze) und als Haftvermittler im allgemeinen einer siliziumorganischen Verbindung. Schlichtemittel bestehen auf Polyurethanbasis und weisen einen Aminogruppen enthaltenden Haftvermittler auf.

Daneben können die Glasfaserschlichten gegebenenfalls auch an sich bekannte Antistatika und Gleitmittel enthalten.

Verfahren zur Herstellung von Glasfaserschlichten auf Polyurethanbasis werden z.B. in den DE-Auslegeschriften 24 26 657 (GB-PS 1 456 628), 2 426 654 und DE-A 2 854 406 beschrieben. Der anorganischen Faser können auch Füllstoffe wie Glimmer, andere Silikate, Kreide und Farbstoffe zugegeben werden.

Die erfindungsgemäßen Polymermischungen sind beispielsweise für folgende Anwendungen besonders geeignet: Halbzeuge, Profile, Spielzeuge, Sitzschalen, Schutzhelme, Pumpengehäuse, Pumpendichtungen, Rohre, Tennisschlägerrahmen, Gehäuse für Werkzeuge und Bohrmaschinen, Pumpenteile, Schalenkoffer sowie Automobilaußenteile wie Stoßfänger, Radabdeckungen, Spoiler, Kühlergrill und Scheinwerfergehäuse. Sie sind besonders geeignet für Artikel mit hoher Verschleißfestigkeit, sehr hohem Weiterreißwiderstand und hoher Bruchdehnung wie Stoßleisten, Schuhteile, Siebelemente, Dübel und Türbeschläge. Die Polymergemische können vorzugsweise mit Metallteilen, z.B. aus Stahl, Eisen und Aluminium flächig verschraubt, verklebt, aufgespritzt oder anders verbunden werden. So können Verbundwerkstoffe verschiedenster Art wie z.B. Stoßleisten, Stoßfänger etc. hergestellt werden.

Die Verwendung entsprechender Formkörper oder Verbundwerkstoffe daraus ist gleichfalls Gegenstand der Erfindung.

Die Formteile aus den Polymermischungen können durch Spritzgießen, Extrudieren, Kalandern, Extrusionsblasen, d.h. durch die üblichen thermoplastischen Formgebungsprozesse erhalten werden.

Die erfindungsgemäßen thermoplastischen Polymermischungen können in unterschiedlicher Weise hergestellt werden. In einer bevorzugten Ausführungsform wird der Polyurethanthermoplast nach dem Band- oder Schnecken-Verfahren hergestellt (siehe Becker/Braun, Kunststoffhandbuch, Band 7: Polyurethane, Kapitel 8.2.1 Seite 428 ff, Carl Hanser Verlag München, Wien 1983). Das thermoplastische Polyurethan kann dann in einem zweiten Schritt mit der Komponente B und gegebenenfalls den weiteren Thermoplasten C gemischt und zu Formkörpern verarbeitet werden. In einer bevorzugten Ausführungsform wird eine Zweischneckenknetmaschine verwendet wobei man in eine erste Einspeisstelle die für die Polyurethanbildung erforderlichen Komponenten einspeist und dann vorzugsweise noch während der Polyurethanbildung im mittleren Teil der Zweischneckenknetmaschine die Komponente B und gegebenenfalls C zudosiert, verwiesen wird in diesem Zusammenhang auf das in der DE-PS 2 302 564 beschriebene Verfahren.

Die genannten Polyurethan-bildenden Komponenten Aa) bis Ac) können über eine einzige oder auch über mehrere Einspeisstellen in den Extruder eingebracht werden. Man kann die Komponenten sowohl getrennt als auch vorvermischt in die Schneckenmaschine einbringen, siehe DE-A-28 42 806. Insbesondere bei der Verwendung von amino funktionellen Kettenverlängerungsmitteln ist es jedoch empfehlenswert, zunächst ein Umsetzungsprodukt aus dem Polyisocyanat und der höhermolekularen Polyhydroxylverbindung herzustellen. Als Isocyanatkomponente Aa) dient in diesem Falle also ein relativ hochmolekulares, NCO-Gruppen aufweisendes Voraddukt.

## Beispiele

### Herstellung der erfindungsgemäßen thermoplastischen Polymermischungen auf einer Zweiwellenknetmaschine

Bei den Beispielen wird eine Zweiwellenschneckenknetmaschine z.B. des Typs ZSK 53 V der Fa. Werner & Pfleiderer, Stuttgart, mit selbstreinigendem Wellenbesatz und einem Knetelementanteil von ca. 20 % verwendet. Der Verfahrensteil besteht aus 12 separat heizbaren Gehäusen, die Länge des Verfahrensteils entspricht etwa dem 20-fachen Wellendurchmesser.

Die Verweilzeiten der Reaktionsschmelze in der Schneckenmaschine betragen in der Regel 0,3 bis 30, bevorzugt 0,5 bis 4 Minuten. Die Temperaturen der Schneckengehäuse liegen zwischen etwa 60 und 300°C (ca. 80 bis 280°C) in der Einzugszone; ca. 100 bis 300°C in der Mitte des Extruders und ca. 120 bis 270°C in der Austragszone. Die aus dem Extruder austretende Schmelze wird nach an sich bekannten Verfahren abgeschreckt und zerkleinert. Die Herstellung der thermoplastischen Polymermischungen erfolgt mit den Ausgangsstoffen der Tabellen 2, 4 und 6 in den angegebenen Gewichtsteilen.

Tabelle 1 gibt die Zusammensetzung der verwendeten TPU-Anteile (Komponente A) wieder.

Tabelle 1

| Zusammensetzung der Komponente A (PU-Anteil) | | | | | |
|---|---|---|---|---|---|
| | TPU 1 | TPU 2 | TPU 3 | TPU 4 | TPU 5 |
| Aa) 4,4′-Diisocyanatodiphenylmethan, enthaltend ca. 2,5 Gew.-% 2,4′-Isomeres | 65,7 | 65,2 | 66,0 | 64,8 | 74,1 |
| Ab) Butandiol-1,4 | 20,9 | 20,6 | 20,8 | 20,6 | 25,9 |
| Hexandiol-1,6 | 2,1 | 2,1 | 2,1 | 2,1 | - |
| Oktadecanol | - | 1,3 | - | 1,5 | - |
| Ac) Butandiol-1,4-adipat, Molekulargewicht 2250 | 10,5 | 10,3 | - | - | - |
| Polytetramethylenetherdiol Molekulargewicht 1000 | - | - | 5,2 | 5,2 | - |
| Polytetramethylenetherdiol Molekulargewicht 2000 | - | - | 5,2 | 5,2 | - |
| 2,2′-6,6′-Tetraisopropyl-diphenylcarbodiimid | 0,1 | 0,1 | - | - | - |
| Pentaerythrityl-tetrakis-3-(3,5-di-t-butyl-4-hydroxyphenyl)-propionat | 0,3 | 0,3 | 0,3 | 0,3 | - |
| 2,6-Di-t-butyl-4-methyl-phenol | 0,2 | 0,2 | 0,2 | 0,2 | - |
| Poly-(N-hydroxyethyl-2,2-6,6-tetramethyl-4-hydroxypiperidinbernsteinsäureester) | 0,2 | 0,2 | 0,2 | 0,2 | - |

Die Komponente Ac) (mit Additiven) wird aus dem 120°C heißen Vorlagekessel über eine Zahnradpumpe in das Gehäuse 1 einer Zweiwellenknetmaschine eindosiert. Ebenfalls in das Gehäuse 1 wird über eine Zahnradpumpe das Diolgemisch Ab) mit einer Temperatur von 60°C dosiert. Die Komponente Aa) wird mit 60°C über eine Zahnradpumpe ebenfalls in das Gehäuse 1 gepumpt. Die kein Polyurethan enthaltenden Thermoplaste bzw. deren Gemische (Komponenten B und gegebenenfalls C-E der Ansprüche) werden über eine Schüttelrinne in die Schneckenmitte eingebracht. An der Schneckenmaschine wurden folgende Gehäusetemperaturen eingestellt:

| Gehäuse | 1 | 2/3 | 4/5 | 6/7 | 8/9 | 11/12 | Kopf |
|---|---|---|---|---|---|---|---|
| Temperatur | 80°C | 200°C | 200°C | 200°C | 220°C | 200°C | 240°C |

<u>Beispiele 1-7</u>

Bei diesen erfindungsgemäßen Beispielen werden thermoplastische Polyurethane mit einem Polyester als Komponente $A_{c)}$ eingesetzt. Als zweite Komponente wird ein Pfropfkautschuk (ABS 1) mit ca. 30 Gew.-% Polybutadien als Elastomerkomponente und ca. 70 Gew.-% Harzkomponente aus Styrol und Acrylnitril verwendet. Die Mengenverhältnisse A:B sind Tabelle 2 zu entnehmen.

Tabelle 2

| Rezepturen der Beispiele 1-7 | | | | | | | |
|---|---|---|---|---|---|---|---|
| Beispiel | 1 | 2 | 3 | 4 | 5 | 6 | 7 |
| TPU 1 | 95 | 90 | 85 | 80 | | | |
| TPU 2 | | | | | 95 | 85 | 80 |
| ABS 1 | 5 | 10 | 15 | 20 | 5 | 15 | 20 |

Die TPU-ABS-Blends weisen nach dreitägiger Lagerung, Verspritzung auf übliche Spritzgußmaschinen und Temperung der Probekörper von 15 h bei 110°C die in Tabelle 3 beschriebenen mechanischen Eigenschaften auf. Die Materialien lassen sich gut thermoplastisch verarbeiten und ergeben bei niedrigen ABS-Gehalten homogene transparente Spritzlinge, bei höheren ABS-Gehalten werden sie transluzent. Sie zeigen Biege-E-Module von mehr als 2000 MPa, sehr hohe Weiterreißwiderstände sowie sehr hohe Werte im Durchstoßversuch bei -20°C bei dem Bruchbild sehr schlagzäher, nicht splitternder Produkte. Der lineare Ausdehnungskoeffizient dieser Blends liegt günstig (niedrig). Da gleichzeitig der Modul und die Schlagzähigkeit für Polyurethanthermoplaste sehr hoch ist, können diese neuen Werkstoffe sogar im Verbund mit Metallen eingesetzt werden.

Tabelle 3

| Eigenschaften der erfindungsgemäßen Produkte entsprechend Beispiel 1 bis 7 | | | | | | | | | |
|---|---|---|---|---|---|---|---|---|---|
| Prüfung | DIN-Norm | Maßeinheit | 1 | 2 | 3 | 4 | 5 | 6 | 7 |
| Zugfestigkeit | 53504 | MPa | 55,2 | 55,2 | 54,2 | 58,2 | 53,9 | 52,7 | 68,6 |
| Bruchdehnung | 53504 | % | 13 | 15 | 47 | 19 | 107 | | 30 |
| Weiterreißwiderstand | 53515 | KN/m | 253,6 | | 296 | 293 | 305 | 330 | 309 |
| Biege-E-Modul | 53452 | MPa | 2437 | 2382 | 2422 | 2352 | 2416 | 2367 | 2310 |
| Biegespannung SbB (RT) | 53452 | MPa | 123 | 122 | 118 | 115 | 120 | 116 | 113 |
| Durchstoßversuch (-20° C) | 53443 | J | 57 | 61 | 85 | 106 | 93 | 130 | 131 |
| Bruchbild bei Durchstoßversuch 1) | | | 3 | 3 | 4 | 4 | 3-4 | 4 | 4 |
| Shore-Härte D | 53505 | | 82 | 83 | 81 | 82 | 83 | 84 | 83 |
| Linearer Ausdehnungskoeffizient $\alpha$ | 53752 | $10^{-6} \cdot K^{-1}$ | 113 | 125 | 113 | 123 | 115 | 119 | 119 |

1) Bewertung 1 = spröde, Splitterbruch
2 = teils spröde, große Risse
3 = teils zäh, einige kleine Risse
4 = zäh, ohne Risse

Beispiele 8-11

Bei diesen erfindungsgemäßen Beispielen werden thermoplastische Polyurethane mit einem Polyetherdiol als Komponente $A_{c)}$ eingesetzt. Die Komponente B ist identisch mit derjenigen der Beispiele 1-7. Die Mengenverhältnisse sind Tabelle 3 zu entnehmen.

Tabelle 4

| Rezepturen der Beispiele 8-12 | | | | | |
|---|---|---|---|---|---|
| Beispiel | 8 | 9 | 10 | 11 | 12 |
| TPU 3 | 95 | 90 | 85 | 80 | |
| TPU 4 | | | | | 80 |
| ABS 1 | 5 | 10 | 15 | 20 | |
| ABS 2 | | | | | 20 |

Diese Blends weisen etwas niedrigere Biege-E-Moduli und Weiterreißfestigkeiten als die Beispiele 1-7 auf, zeigen aber gleichfalls hervorragende Kälteeigenschaften (Tab. 5).

Beispiel 12

Bei diesem Beispiel ist die Komponene $A_{b)}$ gegenüber Beispiel 11 durch den Zusatz von Octadecanol geringfügig geändert. Als Pfropfkautschuk (ABS 2) wird hier ein Typ mit 50 Gew.-% Butadien verwendet. Dieses Produkt ist weicher und in der Kälte spröder (Tab. 5).

Tabelle 5

| Eigenschaften der erfindungsgemäßen Produkte entsprechend Beispiel 8 bis 12 | | | | | | | |
|---|---|---|---|---|---|---|---|
| Prüfung | DIN-Form | Maßeinheit | 8 | 9 | 10 | 11 | 12 |
| Zugfestigkeit | 53504 | MPa | 63,0 | 62,3 | 56,8 | 56,4 | |
| Bruchdehnung | 53504 | % | 146 | 156 | 160 | 176 | |
| Weiterreißwiderstand | 53515 | KN/m | 241 | 248 | 237 | 268 | |
| Biege-E-Modul | 53452 | MPa | 2033 | 2022 | 1950 | 2027 | 1704 |
| Biegespannung SbB (RT) | 53442 | MPa | 106 | 102 | 98 | 103 | 78 |
| Durchstoßversuch (-20° C) | 53443 | J | 79 | 99 | 91 | 113 | 20 |
| Bruchbild bei Durchstoßversuch [1)] | | | 4 | 4 | 4 | 4 | 2-3 |
| Shore-Härte D | 53505 | | 80 | 82 | 80 | 81 | 79 |
| Linearer Ausdehnungskoeffizient $\alpha$ | 53752 | $10^{-6} \cdot K^{-1}$ | 109 | 117 | 114 | 120 | |

[1)] Bewertung 1 = spröde, Splitterbruch
2 = teils spröde, große Risse
3 = teils zäh, einige kleine Risse
4 = zäh, ohne Risse

Beispiel 13-16

Die Materialien dieser nicht erfindungsgemäßen Beispiele wurden in derselben Weise wie die der Beispiele 1-12 hergestellt. Tabelle 6 gibt die Zusammensetzung an.

Beispiel 13 und 14

Hier handelt es sich um die thermoplastischen Polyurethan der Beispiele 1-4 bzw. 5-7 (TPU 1 und TPU2). Es handelt sich um sehr steife Produkte (Biege-E-Modul über 2400 MPa, Tabelle 7), die beim Durchstoßversuch bei -20° C niedrige Werte und ein sprödes Bruchbild zeigen.

Beispiel 15

Hier ist TPU 1 mit 10 Gew.-% eines thermoplastischen Polybutylenterephthalatesters mittlerer Viskosität geblendet. Auch dieses Material zeigt schlechtere Kälteeigenschaften als die erfindungsgemäßen Beispiele.

Beispiel 16

Die TPU-Komponente besteht in diesem Blend nur aus 4,4'-Diisocyanatodiphenylmethan und Butandiol, bei Komponente B handelt es sich um ABS 1. Dieses Material hateinen deutlich niedrigen Biege-E-Modul und schlechte Kälteeigenschaften (Tab. 7).

Tabelle 6

| Rezepturen der Beispiele 13-16 | | | | |
|---|---|---|---|---|
| | 13 | 14 | 15 | 16 |
| TPU 1 | 100 | - | 90 | - |
| TPU 2 | - | 100 | - | - |
| TPU 4 | - | - | - | - |
| TPU 5 | - | - | - | 43,6 |
| ABS 1 | | | | 56,4 |
| PBT | - | - | 10 | - |

Tabelle 7

| Eigenschaften der nicht erfindungsgemäßen Produkte entsprechend Beispiel 13 bis 16 | | | | | | |
|---|---|---|---|---|---|---|
| Prüfung | DIN-Norm | Maßeinheit | 13 | 14 | 15 | 16 |
| Zugfestigkeit | 53504 | MPa | 57,8 | 50,2 | 60,9 | 45,7 |
| Bruchdehnung | 53504 | % | 10 | 100 | 20 | 174 |
| Weiterreißwiderstand | 53515 | KN/m | | | 350 | 249 |
| Biege-E-Modul | 53452 | MPa | 2482 | 2459 | 2573 | 1773 |
| Biegespannung SbB (RT) | 53452 | MPa | 124 | 125 | 120 | 68 |
| Durchstoßversuch (-20 °C) | 53443 | J | 85 | 19 | 11 | 20 |
| Bruchbild bei Durchstoßversuch [1)] | | | 3 | 3 | 1 | 2-3 |
| Shore-Härte D | 53505 | | 82 | 81 | 82 | 79 |

[1)] Bewertung 1 = spröde, Splitterbruch
2 = teils spröde, große Risse
3 = teils zäh, einige kleine Risse
4 = zäh, ohne Risse

## Ansprüche

1. Thermoplastische Polymermischungen, bestehend im wesentlichen aus einer Mischung aus
A) einem thermoplastischen Polyurethan erhältlich durch Reaktion von
a) einem Diisocyanat Aa)
b) wenigstens einem kurzkettigen Kettenverlängerer Ab),
c) einer Hydroxyl- oder Aminogruppen-haltigen höhermolekularen Verbindung Ac), vorzugsweise mit einem Molekulargewicht von 600 bis 6000
B) wenigstens einem Pfropfkautschuk und/oder ABS-Thermoplasten B, wobei das Gewichtsverhältnis von A : B von 96 : 4 bis 4 : 96 betragen kann,
C) gegebenenfalls mit wenigstens einer weiteren thermoplastischen Komponente C, wobei das Gewichtsverhältnis von (A + B) : C 95 : 5 bis 5 : 95 sein kann,
D) gegebenenfalls den üblichen Hilfsstoffen und
E) gegebenenfalls Füllstoffen und/oder Fasern
dadurch gekennzeichnet, daß bezogen auf die Summe Aa) bis Ac) der Gewichtsanteil von Ac) 5 bis 25 Gew.-% und daß das Verhältnis NCO-Gruppen der Komponente Aa) zu den Zerewitinoff-aktiven Gruppen der Komponenten Ab) und Ac) 0,9 bis 1,1 beträgt und als C) verwendete Terephthalsäureester zu weniger als 20 % eingestzt werden.

2. Polymermischung nach Anspruch 1, dadurch gekennzeichnet, daß das Diisocyanat Aa) 4,4'-Diisocyanatodiphenylmethan mit maximal 5 Gew.-% 2,4'-Diisocyanatodiphenylmethan ist.

3. Polymermischung nach wenigstens einem der vorhergehenden Ansprüche, dadurch gekennzeichnet, daß

der Kettenverlängerer Ab) ein Polyalkohol, ein Polyamin oder ein Aminoalkohol mit einem Molekulargewicht von maximal 399 ist.

4. Polymermischung nach wenigstens einem der vorhergehenden Ansprüche, dadurch gekennzeichnet, daß die Hydroxylgruppen-haltige höhermolekulare Verbindung Ac) ein Polyesterdiol ist mit einem Molekulargewicht von 600 bis 6000.

5. Polymermischung nach wenigstens einem der vorhergehenden Ansprüche, dadurch gekennzeichnet, daß die Komponente B ein ABS-Thermoplast mit 25-40 Gew.-% Butadien ist.

6. Polymermischung nach wenigstens einem der vorhergehenden Ansprüche, dadurch gekennzeichnet, daß als Komponente C ein Terephthalsäureester, insbesondere Polybutylenterephthalat, enthalten ist.

7. Polymermischung nach wenigstens einem der vorhergehenden Ansprüche, dadurch gekennzeichnet, daß als Komponente C ein Polycarbonat oder eine Mischung aus einem Polybutylenterephthalat und einem Polycarbonat enthalten ist.

8. Polymermischung nach wenigstens einem der vorhergehenden Ansprüche, dadurch gekennzeichnet, daß die Shore-Härte D der Mischung 73 bis 90 und der E-Modul > 1000 MPa beträgt.

9. Polymermischung nach wenigstens einem der vorhergehenden Ansprüche, dadurch gekennzeichnet, daß sie bis zu 50 Gew.-% anorganische oder organische Fasern und/oder andere anorganische Füllstoffe wie Glimmer oder Talkumm als Komponente E enthalten.

10. Polymermischung, nach wenistens einem der vorhergehenden Ansprüche, dadurch gekennzeichnet, daß sie 10-40 Gew.-% Glasfasern, mit einer Schlichte auf Polyurethanbasis enthält.

11. Verfahren zur Herstellung thermoplastischer Polymermischungen gemäß Anspruch 1, dadurch gekennzeichnet, daß man in einer Zweischneckenknet maschine in einer ersten Einspeisstelle die Komponenten Aa) bis Ac) und in einer danach angeordneten Einspeisstelle die Komponenten B) und gegebenenfalls C) und E) einspeist.

12. Thermoplastische Formkörper und Verbundwerkstoffe daraus enthaltend eine Polymermischung, dadurch gekennzeichnet, daß die Polymermischung wenigstens einem der vorhergehenden Ansprüche entspricht.